Europäisches Patentamt

European Patent Office

Office européen des brevets

(11) Numéro de publication: **0 095 613**
A2

## (12) DEMANDE DE BREVET EUROPEEN

(21) Numéro de dépôt: 83104600.8

(22) Date de dépôt: 10.05.83

(51) Int. Cl.³: **A 01 G 23/00**

(30) Priorité: **10.05.82 IT 2116982**

(43) Date de publication de la demande: 07.12.83
**Bulletin 83/49**

(84) Etats contractants désignés: **AT BE CH DE FR GB IT LI LU NL SE**

Demandeur: **Specchia, Giuseppe, Rue Adjudant Jannin, F-55250 Triaucourt en Argonne (FR)**
Demandeur: **Specchia, Luciano, Rue Adjudant Jannin, F-55250 Triaucourt en Argonne (FR)**
Demandeur: **Specchia, Dominique, Rue Adjudant Jannin, F-55250 Triaucourt en Argonne (FR)**
Demandeur: **Specchia, Maria Celeste Mlle., Rue Adjudant Jannin, F-55250 Triaucourt en Argonne (FR)**

(72) Inventeur: **Specchia, Antonio, Rue Adjudant Jannin, F-55250 Triaucourt en Argonne (FR)**
Inventeur: **Specchia, Giuseppe, Rue Adjudant Jannin, F-55250 Triaucourt en Argonne (FR)**
Inventeur: **Specchia, Luciano, Rue Adjudant Jannin, F-55250 Triaucourt en Argonne (FR)**
Inventeur: **Specchia, Dominique, Rue Adjudant Jannin, F-55250 Triaucourt en Argonne (FR)**
Inventeur: **Specchia, Maria Celeste Mlle., Rue Adjudant Jannin, F-55250 Triaucourt en Argonne (FR)**

(71) Demandeur: **Specchia, Antonio, Rue Adjudant Jannin, F-55250 Triaucourt en Argonne (FR)**

(74) Mandataire: **Riccardi, Sergio, Riccardi & Co. Via Macedonio Meiloni, 32, I-20129 Milano (IT)**

(54) **Machine pour couper et récupérer les résidus de la coupe des arbres.**

(57) L'invention concerne une machine automotrice avec traction à roues pneumatiques qui coupe, récupère et déchiquette tous les résidus de la coupe des arbres, les réduisant en copeaux aptes aux élaborations industrielles. La partie essentielle de la machine est constituée par la tête antérieure mobile, laquelle, au moyen de cylindres verticaux latéraux et de rouleaux transversaux centraux, achemine les résidus, coupés par un couple de disques à lames contre-tournantes, au dispositif déchiqueteur duquel les copeaux sont ensuite envoyés pneumatiquement à un caisson de récolte.

- 1 -

"MACHINE POUR COUPER ET RECUPERER LES RESIDUS DE LA COUPE DES ARBRES"

La présente invention concerne une machine qui effectue les opérations de coupe et récupération de tous les résidus du bois après l'exécution de la coupe des arbres.

Comme on sait, quand on procède à la coupe d'un bois, il y a toujours eu le problème de la récupération et de l'exploitation des résidus restés après l'abattage des arbres, la préparation, le débardage et le transport des troncs et des branches plus grandes.

Par le terme résidus on comprend une gamme très vaste de parties qui ne sont presque jamais utilisées, car les frais de main d'oeuvre pour leur récolte, élaboration et transport, effectués avec les moyens actuellement disponibles, dépassent la valeur de marché et ainsi le transport et la manipulation du matériel de petit diamètre, ayant un coût de récolte prohibitif, est abandonné laissant non exploitée une quantité énorme de bois, avec un gaspillage considérable de matière première précieuse et d'énergie. A part cela, le bois mort laissé au sol provoque une diffusion d'insectes nuisibles et danger d'incendie, par conséquent la récolte et l'utilisation de ce bois abandonné constitue un problème très important et pratiquement sans possibilité de ré-solubilité avec les moyens actuellement connus, notamment pour le coût et les difficultés de trouver de la main d'oeuvre disposée à déployer le pénible et inconfortable travail de récolte, préparation, débardage et mise en fagots de ces résidus.

Les résidus comprennent tout ce qui reste sur le terrain après l'abattage des arbres, c'est-à-dire de petites branches et de petits troncs, têtes d'arbre, cimes,ramilles , déchets et buissons. Toutes les opérations susmentionnées étaient autrefois effectuées à la main, au moins partiellement par de la main d'oeuvre non spécialisée; récemment on a tenté de mécaniser au moins quelques-unes de ces opéerations, par exemple en équipant une pelle mécanique de lames tournantes pour couper les buissons, les ramilles et les taillis, mais on a constaté que les tentatives d'adapter les machines déjà existantes à ces tâches ne résolvent pas le problème, parce qu'on est encore obligés d'employer de la main d'oeuvre et plusieurs machines, avec un coût qui résulte disproportionné et supérieur à la valeur des résidus à récupérer.

La seule solution possible à ce grave problème des exploitations forestières est dans la réalisation d'une machine spéciale et originale qui effectue toute seule, avec l'emploi d'un seul opérateur, toutes les opérations nécessaires pour la coupe, la récupération, le déchiquetage et le transport des résidus de la coupe du bois.

La présente invention résout pleinement et brillamment ce problème avec un appareil automoteur à commande hydraulique, doté de roues et pneus et capable de surmonter des pentes même considérables en suivant la nature du terrain, lequel coupe, récupère, déchiquette et transporte tous les résidus de la coupe des arbres, jusqu'à un diamètre plutôt élevé (par exemple 30 cm.) les réduisant en copeaux (par exemple de 20 x 20 x 5 mm.) aptes aux plus diverses élaborations industrielles, telles que la production de panneaux, de cellulose pour papier, laissant le terrain nettoyé, l'enrichissant et revalorisant les terrains pauvres, réalisant ainsi, à part l'exploitation économique des résidus de la coupe des bois qui étaient jusqu'ici abandonnés, une amélioration considérable des conditions du sol, éliminant en même temps les opérations de rassemblement et débardage des fagots, empêchant la diffusion d'insectes. nuisibles et diminuant considérablement les risques d'incendies, provoqués par l'abandon sur le terrain de ce bois mort.

L'appareil, selon la présente invention, comprend un châssis doté de coupes de roues motrices commandées hydrauliquement à une vitesse de travail qui peut être de 0 à 12 km/h, tandis que la vitesse de marche de transfert peut arriver par exemple à 20-25 km/h, ce châssis supportant dans la partie centrale les moteurs hydrauliques, l'appareil déchiqueteur de bois, la cabine de manoeuvre pour l'opérateur et une grue pour le soulèvement de bois déjà empilé; dans la partie postérieure un caisson de récolte du bois déchiqueté, acheminé avec un convoyeur pneumatique de l'appareil déchiqueteur, et un dispositif de chargement et déchargement du caisson; et dans la partie antérieure une tête mobile, comprenant un couple de disques à lames contre-tournantes, et une série de cylindres verticaux latéraux et rouleaux transversaux centraux

0095613

- 4 -

motorisés qui forment un parcours de montée qui alimente les résidus, saisis par la partie frontale de l'appareil et coupés par les lames contre-tournantes, jusqu'à l'appareil déchiqueteur.

Ces avantages et d'autres, caractéristiques et buts de la présente invention résulteront d'ailleurs encore plus clairs et évidents d'après la description détaillée suivante d'une forme de réalisation préférentielle, reportée à titre d'exemple et non limitatif de la portée de l'invention même, et faite avec référence aux figures des tables annexées de dessins illustratifs et schématiques, eux aussi non limitatifs dans le cadre protecteur appartenant à l'invention et où

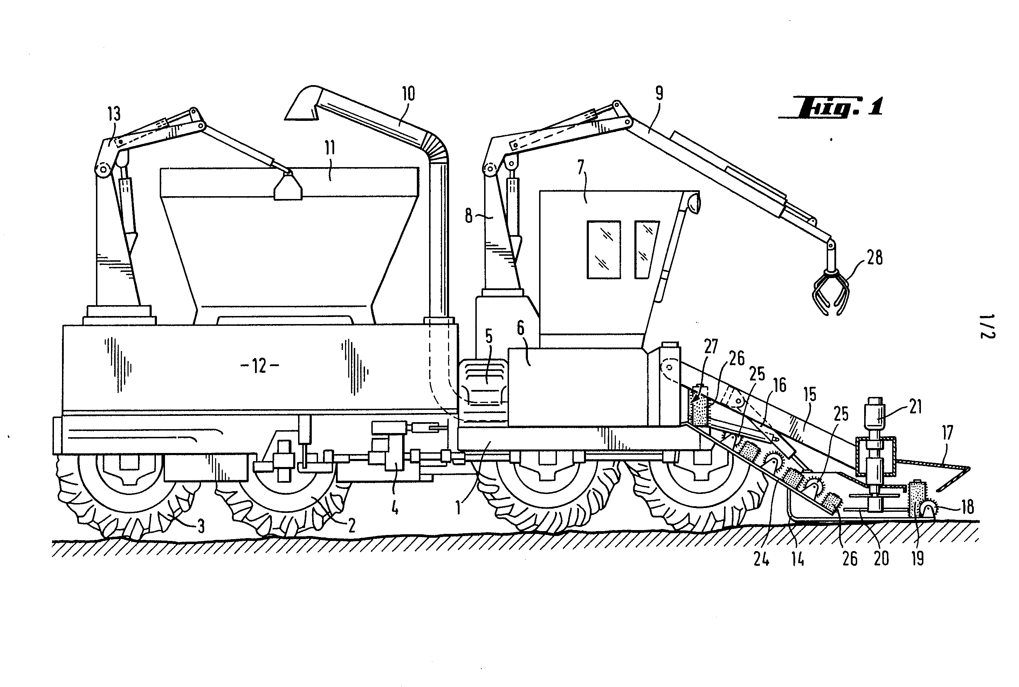

la fig.1 est une vue latérale de la machine dans son ensemble; et

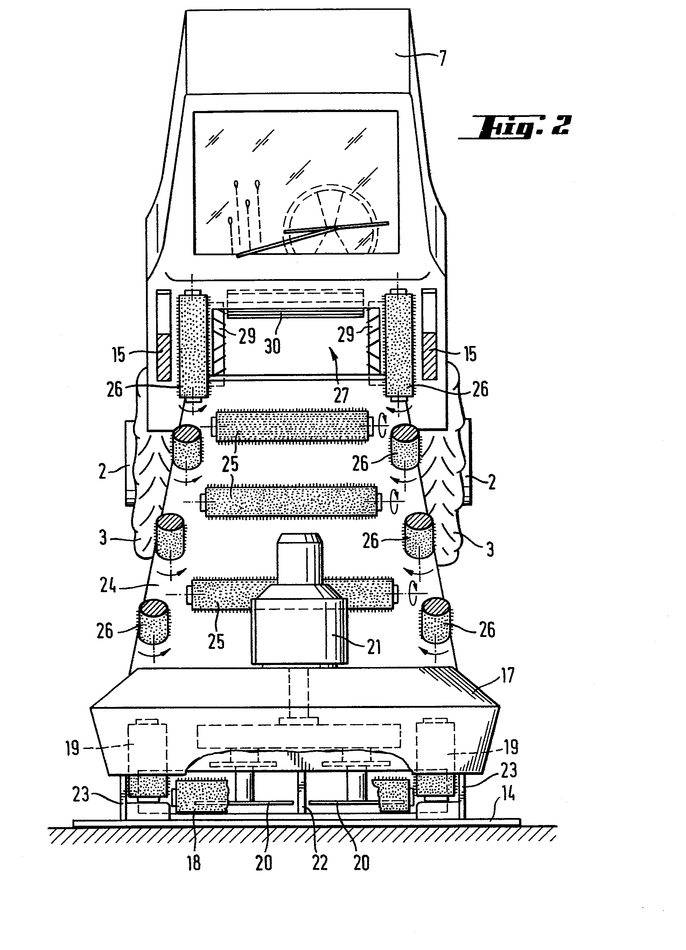

la fig.2 est une vue frontale de la seule partie antérieure de la machine pour montrer le système de récolte et coupe des résidus, avec différents éléments emportés pour plus de clarté et simplicité d'illustration.

Faisant maintenant référence en détail aux figures des dessins annexés, la machine servant d'exemple aux principes de la présente invention comprend un châssis portant inférieur 1, s'appuyant sur des couples de roues motrices 2 dotées de pneus 3 du type fortement en relief pour les usages hors-route, ces roues motrices 2 étant commandées à travers d'opportunes transmissions 4 par un moteur hydraulique 5 monté en position centrale, généralement accouplé à un deuxième moteur hydraulique qui commande les autres dispositifs de la machine.

A côté du moteur hydraulique 5 on a placé l'appareil déchiqueteur 6, qui peut être de n'importe quel type connu pour hacher le bois en petits morceaux ou copeaux, au-dessus duquel on a posé la cabine de manoeuvre 7, en position bien soulevée permettant à l'opérateur de bien surveiller le travail de la partie antérieure de la machine; dans le voisinage de la cabine 7 on a aussi placé la grue hydraulique8 à bras allongeable 9 qui est employée pour soulever des fagots ou des pièces de bois qui ne peuvent pas être introduits dans la bouche de l'appareil. Dans ce but la grue 8 est équipée d'un polype, benne, pince ou organe semblable 28 de récupération et débardage de ces résidus qui sont ensuite disposés devant l'embouchure 27 de l'appareil déchiqueteur 6.
Les copeaux de bois broyés par l'appareil déchiqueteur 6 sont envoyés, à travers un convoyeur pneumatique 10, au caisson de récolte 11 placé sur la plate-forme postérieure 12 de la machine, de laquelle le caisson 11 peut être chargé et déchargé à travers le bras hydraulique articulé 13. Toutefois le caisson 11 pourrait aussi être fixe, et les copeaux déchargés à travers un système à turbine pneumatique, quand la machine arrive sur le lieu où elle doit être déchargée.

Toutefois la partie essentielle et plus intéressante de la machine selon la présente invention est celle antérieure ou frontale qui est constituée par une semelle    14 supportée par le châssis principal de la machine à travers des bras latéraux 15 articulés de manière à pouvoir régler sa position en hauteur, suivant les aspérités du terrain, au moyen de cylindres hydrauliques de manoeuvre appropriés 16. Frontalement la   semelle   14 présente un avant-bec ou petit châssis de proue 17 qui sert à plier les buissons, de petites plantes et tout autre arbuste qui doit être coupé et ramassé par la machine.

La semelle 14 agit en pratique comme une pelle de récolte dans laquelle tous les résidus du bois sont happés à l'aide du rouleau antérieur 18 et des cylindres latéraux introducteurs 19 qui, tournant en sens opposé entre eux, tirent dans l'embouchure de la semelle 14 tout le matériel, lequel, s'il a un diamètre supérieur à une dimension établie d'avance par exemple de 15 cm., est aussitôt coupé par les lames, fixées de manière élastique pour pouvoir céder en cas d'obstacles (par exemple des cailloux qui entrent avec le bois) à deux disques 20 contre-tournants et mus par un moteur hydraulique 21, entre les disques duquel on a placé un diaphragme séparateur 22, faisant partie de la carcasse de la semelle 14 avec les parties latérales de fermeture 23, qui empêche l'entrée de la machine aux gros cailloux et autres gros obstacles qui pourraient endommager les appareillages. Après avoir été coupé et dechiqueté par les disques à lame 20, le bois remonte le long du plan incliné 24 de liaison entre semelle 14 et châssis 1 de la machine, au moyen d'une série de rouleaux transversaux 25 et de cylindres latéraux verticaux 26, tous tournant en synchronisme commandés par exemple par des transmissions à chaîne (pas montrées) jusqu'à atteindre l'embouchure 27 de l'appareil déchiqueteur 6. Tous les rouleaux transversaux 18 et 25 et les cylindres 19 et 26, qui servent à introduire et entraîner le bois vers l'intérieur de la machine jusqu'à l'entrée de l'appareil déchiqueteur 6, sont dotés de pointes opportunes, tiges saillantes ou tout autre élément apte à saisir le bois, qui autrement glisserait et échapperait à la prise si ces rouleaux et cylindres étaient lisses. En correspondance de l'embouchure 27 de l'appareil déchiqueteur 6 on a prévu des rouleaux dégraisseurs et précisément un rouleau horizontal supérieur 30 et deux rouleaux verticaux 29, pour réduire avec leurs lames le bois supérieur à un certain diamètre (par exemple 30 cm.) qu'il provienne de la bouche de chargement inférieure ou qu'il soit déposé à l'embouchure de la grue 8.

D'après la description qui précède on voit que la machine, selon la présente invention, atteint pleinement les buts et les objectifs préfixés, mais on doit encore une fois mettre en évidence le fait qu'on a décrit une forme de réalisation à titre d'exemple et non limitative, et que de nombreuses modifications, variantes, adjonctions, substitutions et même éliminations d'éléments pourront être faites à la machine même, sans pour cela se détacher de l'esprit ni du but de l'invention ni même sortir de son cadre de protection et de ses principes caractéristiques de structure et fonctionnement, comme cela est aussi défini dans les revendications annexées.

REVENDICATIONS

1) Machine pour couper et récupérer les résidus de la coupe des arbres, caractérisée par le fait de comprendre un châssis doté de couples de roues motrices, supportant un appareil déchiqueteur de bois, auquel les résidus sont alimentés à travers une tête antérieure fixée de manière articulée au châssis, dotée d'un couple de disques contre-tournants munis de lames qui coupent et déchiquettent les résidus saisis par la partie frontale de la machine; de ces disques les résidus sont faits monter jusqu'à l'introduction dans l'appareil déchiqueteur à travers une série de cylindres verticaux latéraux et des rouleaux transversaux centraux motorisés qui forment un parcours d'alimentation le long du plan incliné de montée.

2) Machine pour couper et récupérer les résidus de la coupe des arbres, selon la revendication 1, caractérisée par le fait que les roues motrices, les disques motorisés et les rouleaux et cylindres du parcours d'alimentation à l'appareil déchiqueteur, sont tous commandés par des moteurs hydrauliques.

3) Machine pour couper et récupérer les résidus de la coupe des arbres, selons la revendication 1, caractérisée par le fait qu'une cabine de manoeuvre pour l'opérateur est disposée en position élevée de manière à pouvoir surveiller le fonctionnement des mécanismes antérieurs de la machine.

4) Machine pour couper et récupérer les résidus de la coupe des arbres selon la revendication 1, caractérisée par le fait que le frontal de la machine présente des moyens de récupération des résidus constitués par un rouleau transversal et deux cylindres latéraux verticaux, tournant de manière à in-

0095613

- 9 -

troduire les rédidus dans la bouche de la machine.

5) Machine pour couper et récupérer les résidus de la coupe des arbres selon les revendications 1 et 4, caractérisée par le fait que les rouleaux et cylindres sont mus en synchronisme par des moyens de transmission opportuns, et présentent des éléments saillants aptes à saisir et entraîner les résidus.

6) Machine pour couper et récupérer les résidus de la coupe des arbres selon les revendications 1 et 4, caractérisée par le fait que le couple de disques contre-tournants et la bouche de chargement de la machine sont montés dans une semelle dotée d'une carcasse avec diaphragme central qui empêche l'entrée de gros obstacles et un avant-bec antérieur d'abattage des résidus à introduire et couper, dont la position par rapport au sol peut être réglée à travers des bras latéraux de support et cylindres hydrauliques de manoeuvre relatifs.

7) Machine pour couper et récupérer les résidus de la coupe des arbres selon la revendication 1, caractérisée par le fait de comprendre aussi une grue hydraulique pour le soulèvement et l'introduction de résidus qui ne peuvent pas être englobés par la bouche de chargement, munie d'un polype, benne, pince ou organe semblable de récupération.

8) Machine pour couper et récupérer les résidus de la coupe des arbres selon la revendication 1, caractérisée par le fait que le bois haché en petites pièces par l'appareil déchiqueteur est envoyé, à travers un convoyeur pneumatique, à un caisson de récolte disposé dans la partie postérieure de la machine.

9) Machine pour couper et récupérer les résidus de la coupe des arbres selon la revendication 8, caractérisée par le fait que le caisson de récolte peut être chargé et déchargé de la machine au moyen d'un bras hydraulique de manoeuvre fixé au châssis de la machine, ou peut être vidé du contenu au moyen d'un système à turbine pneumatique.

10) Machine pour couper et récupérer les résidus de la coupe des arbres selon la revendication 1, caractérisée par le fait qu'en correspondance de l'embouchure de l'appareil déchiqueteur on a prévu des rouleaux dégrossisseurs dotés de lames pour réduire le diamètre du bois à introduire dans cet appareil.

11) Machine pour couper et récupérer les résidus de la coupe des arbres selon la revendication 10, caractérisée par le fait que les rouleaux dégrossisseurs comprennent un rouleau horizontal supérieur et un rouleau vertical sur chaque côté de l'embouchure de l'appareil déchiqueteur.

12) Machine pour couper et récupérer les résidus de la coupe des arbres, substantiellement comme décrit précédemment et comme illustré dans les figures des dessins annexés, pour les buts sus-mentionnés.

Fig. 1

*Fig. 2*